# EUROPEAN PATENT SPECIFICATION

(11) **EP 2 551 709 B1**
(45) Date of publication and mention of the grant of the patent: **03.06.2015**
(21) Application number: 11305974.5
(22) Date of filing: 27.07.2011
(51) Int. Cl.: G02B 6/44

(54) **Device for optical fiber distribution**
Vorrichtung zur Glasfaserverteilung
Dispositif pour la distribution de fibres optiques

(43) Date of publication of application: 30.01.2013
(73) Proprietor: Nexans, 75008 Paris (FR)
(72) Inventor: Andersson, Per-Erik, 51434 TRANEMO (SE); Persson, Jörgen, 51470 Grimsas (SE); Josefsson, Johannes, 50760 Boras (SE)
(74) Representative: Allain, Laurent

(56) References cited:
- WO-A1-2009/032245
- FR-A1- 2 694 642
- FR-A1- 2 959 383
- GB-A- 2 460 452
- US-A- 5 946 440

## Description

The present invention relates to an optical fiber distribution device.

Such a device exists and has been already patented. As an example, US5946440 discloses an optical fiber cable management system including a modular side wall construction, and a plurality of slideable and rotatable cable management trays disposed within the device. In other words, each individual device of this system comprises either two individual rotatable trays or a sliding drawer along two linear rails placed on each side. Each individual device disclosed in this US patent, is not enough flexible, and the connecting means implied in such system appear complicated to apply, because of the presence at the same time of rotary trays and sliding drawer.

Further examples of trays combining sliding and rotary motion can be found in documents GB2460452 and FR2694642.

The optical fibers distribution device according to the invention is easy to apply and is more flexible than all the devices found in the prior art documents and thus may be adapted to a great variety of situations that a customer may encountered. The term "flexible" means that the device is able to be moved in several directions, either by rotation or by translation. Moreover, although such device is very flexible of use, it remains of a compact design and thus may be easily put in any place.

To better understand the following disclosure, and especially terms like "horizontal", "vertical", "left", "right" or "front", it is supposed that the device is in an horizontal position, as if it was fixed to a vertical wall.

More specifically, the object of the invention is an optical fiber distribution device, including an outer box and an inner frame, said inner frame being movable inside said box. The main feature of a device according to the invention is that said device involves connecting means between said frame and said box, so that the inner frame can be rotated in two opposite directions, and can be linearly slid out from the box (2).

In other words, the device involves connecting means in such a way that the inner frame may be displaced according three movements: rotation in one direction, rotation in the opposite direction and a linear translation. Such displacements allow the inner frame to take out from the outer box in three different ways, each way being adapted to a specific situation encountered by the customer to perform the suitable optical fibers and/or cables connections. Although the inner frame may go outside the outer box, the connecting means are intended to maintain said frame in contact with said box. In a preferred embodiment of the invention, the connecting means are mechanical, and can be handled without any specific tool. A usual tool such that a screwdriver is only needed during transformation between the different options the box solution have.

Advantageously, the connecting means are conceived to maintain the device in a locking position, for which the inner frame is locked inside the box without moving. It is very important to lock all the parts of the device to optimize the transportation conditions of said device. During such transportation phases, the inner frame is locked within the outer box, to avoid said inner frame to take out from said box and to increase the device volume. During the transportation phases, the device is like a simple box, which is easy and safe to handle by a person.

Preferentially, the device comprises two shafts placed at its side ends, one shaft having to be removed to allow the rotation of the inner frame around the other shaft. It is supposed that each shaft is fixed to the outer box to allow the rotation. Thus, the mechanical connecting means between the inner shaft and the outer box comprise two shafts, one intended to ensure the rotation in one direction, and the other in the opposite direction. If the device is assumed to be in a horizontal position, the shafts are then vertical. In this way, the inner frame may be rotatable in a horizontal plane. When the two shafts are simultaneously fixed to the outer box, the inner frame cannot be rotated. These two shafts constitute parts of the connecting means.

In an advantageous way, each shaft is composed of a screw. Hence, the customer may easily and quickly remove the shaft with a screwdriver. In another preferred embodiment of a device according to the invention, instead of one shaft on one side and one on the other side it is possible to use two very short shafts on each side and lock them with maybe standard star-shaped lock washers.

In a preferential way, the inner frame comprises side opening wings placed near by the shafts, a pressure exerted with hands simultaneously on each wing releasing the inner frame and allowing said inner frame to slide linearly to take out from the box. This way, in addition to the shafts, the side wings constitute parts of the connecting means of the device, which retain the inner box inside the outer box, without any possibility to move outside said box.

Advantageously, the opening wings are made of a material which is elastically deformable. They may be composed for instance of a thin standard metal sheet. In their natural positions, the wings retain the inner frame within the outer box. A slight pressure exerted on said wings releases the inner frame which may slide outside the box. If the pressure stops, the wings find back their initial locking position. In one preferred embodiment of a device according to the invention, the opening wings can have hole for padlock.

In an advantageous way, the outer box is a parallelepiped with a rectangular opening, the inner frame being able to slide along a direction perpendicular to the opening plane. This way, the device can be assimilated to a sliding drawer.

Preferentially, the inner frame may be completely separated from the box by bending it up, after it slid. This possibility increases the flexibility degree of the device, by proposing another configuration of use, which consists in completely separating the inner frame from the outer box. It is supposed that the separation process is reversible: once said inner frame has been separated from said box, it can be another time easily and quickly connected to the outer box, under the same conditions as before, without tools. The complete separation can be considered as an additional option.

In a preferential way, the outer box comprises two fixing means. With such fixing means, the device may be fixed to any standard rack/frame /cabinet.

In a preferred embodiment of a device according to the invention, the fixing means are placed on the side ends of the device, so that said device may be fixed in a horizontal position to a vertical frame.
It is also possible to easily adjust the fixing means individually and change the complete box position relatively to the vertical frame.

One of the great advantages of a device according to the invention is that it comprises connecting means between the inner frame and the outer box, which have two functions: in one hand, to allow the said inner frame to move in three different ways with respect to outer box, and on the other hand, it constitutes a locking device during the transportation. Moreover, it has also the advantage to be very flexible of use, by proposing three kinds of motion: rotation on the left, rotation on the right and a linear translation, making the said device adaptable to a great variety of situations.

A detailed description of one preferred embodiment of a device according to the invention is given, referring to figures 1 to 2.
- Figure 1 is a perspective view of a device according to the invention,
- Figure 2 is a perspective view of a device according to the invention without the top wall, and showing the inner frame,
- Figure 3 is an enlarged view on one side of the device of the figure 2,
- Figures 4a, 4b and 4c are three perspective views of a device at different stages of the inner frame sliding,
- Figures 5a, 5b, and 5c are three perspective views of a device at different steps of a preparation process to make the inner frame rotatable around the left shaft.

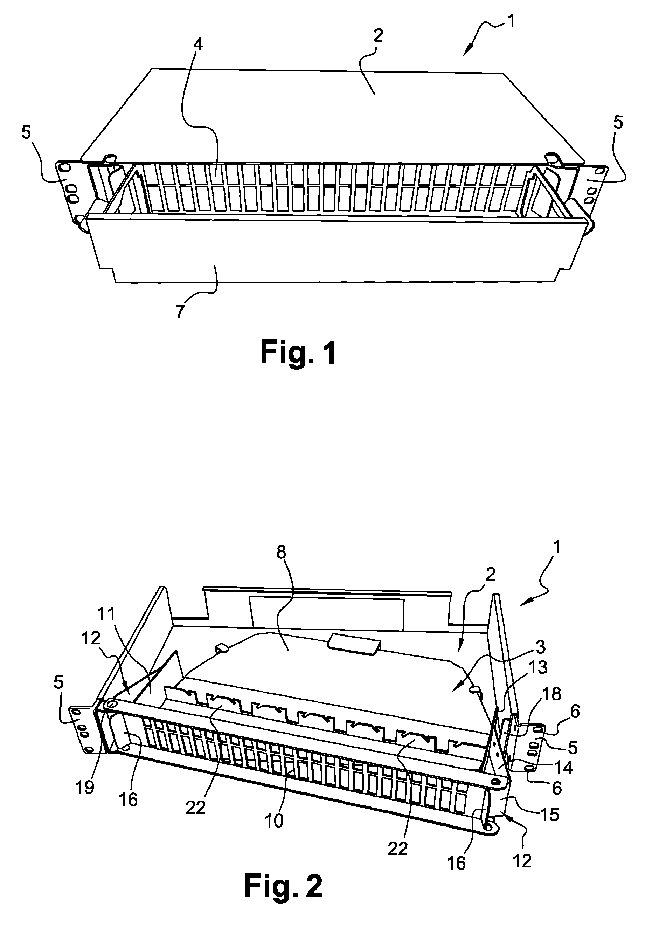

Referring to figure 1, an optical fiber distribution device 1 according to the invention comprises an outer box 2 and an inner frame 3, said outer box 2 being intended to be fixed on an external structure, and said inner frame 3 being able to be displaced with respect to said outer box 2. The outer box 2 may be assimilated to a rectangular parallelepiped with a rectangular opening 4, and is equipped with fixing means 5. Each fixing mean 5 may be represented by a piece with a small thickness and which is parallel to a vertical plane, said piece being perforated by a plurality of aligned holes 6, and said holes 6 being intended to be crossed by screws to ensure the fixing of the outer box 2 to an external structure. The inner frame 3 comprises a front rectangular face 7 remaining outside the outer box 2, and acting as a protection means for the cables and /or optical fiber crossing the inner frame 3 and also gives area for text identification and cable guiding. This front face 7 constitutes an overhang for the device 1 according to the invention.

Referring to figure 2, the inner frame 3 may be represented by a trapezoidal horizontal tray 8, supporting a series of vertical guides 22, each guide 22 having two superior notches 9 to put inside the optical fibers. The inner frame 3 comprises a vertical perforated front face 10 which may be compared to a grid intended to be crossed by the different cables and/or optical fibers to be connected, said grid 10 being parallel to front face 7, and being placed behind it. This vertical front face 10 is perforated according to the used optical adapter which may be round, square or rectangular.

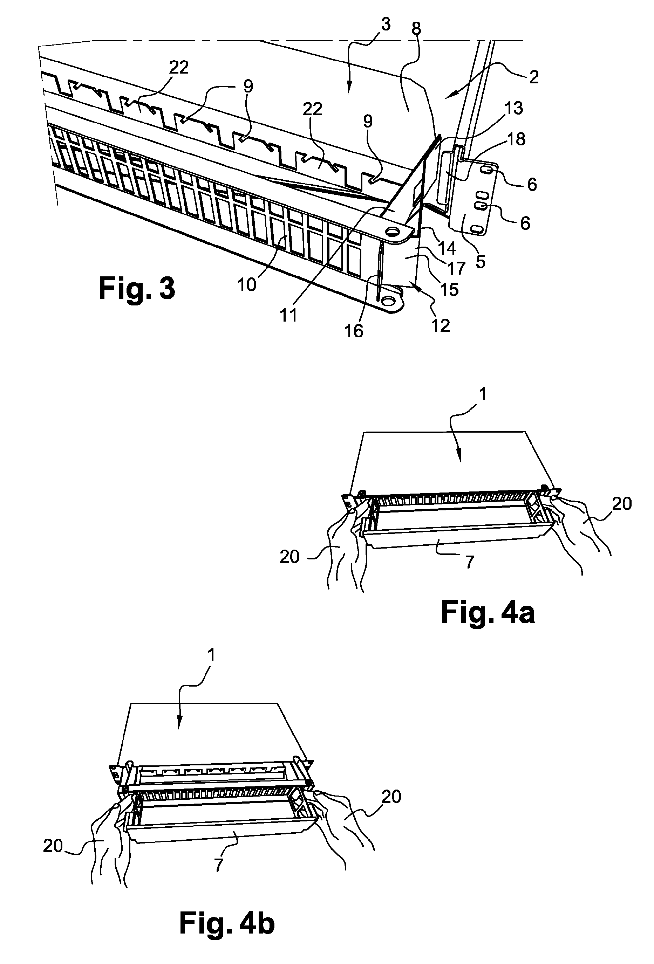

Referring to figure 3, the horizontal tray 8 is linked to the grid 10 with two side vertical walls 11. A wing 12 is fixed on each wall 11 of the inner frame 3. One wing 12 may be represented by an elongated piece made of a series of vertical walls 13,14,15,16, one end 13 of said wing 12 being fixed to a vertical wall 11 of the inner frame 3, and the other end 16 remaining distant from said wall 11. The two intermediate walls 14, 15 of the wing 12 are perpendicular and form together a lateral protrusion 17, which is blocked against a vertical abutment 18 of the outer box 2. The device 1 comprises two side abutments 18 for the two wings 12. A wing 12 is made of a material which is elastically deformable like a metal sheet so that a lateral pressure exerted on the distant end 16 of said wing 12 towards the center of the device 1, displaces the lateral protrusion 17 towards the lateral wall 11 of the inner frame 3, which is not stopped any more by the abutment 18. This operation consisting in exerting a pressure on both wings 12, releases the inner frame 3 which is not blocked any more against the two lateral abutments 18, allowing said inner frame 3 to slide linearly to take out from the outer box 2.

Referring to figure 2, the device 1 according to the invention comprises two vertical shafts 19 which are preferentially composed of screws. A screw 19 is placed at each side end of the grid 10 of the inner frame 3 and is also fixed to the outer box 2. The inner frame 3 is able to turn around each shaft 19. On this subject, it is obvious that if the two shafts 19 are simultaneously fixed to the device 1, the inner frame cannot turn around said shafts 19. If the customer needs to make turn the inner frame 3 on the left or on the right, it removes the undesirable shaft 19, so that said inner frame 3 can turn around the other shaft 19.

Referring to figure 4a, if the customer wants to make slide linearly the inner frame 3 to take out from the outer box 2, he places his two hands 20 on both sides of the device 1 which is horizontally fixed to a vertical structure.

Referring to figure 4b, he then exerts a side pressure on the wings 12 towards the center of said device 1, in order to release said inner frame 3.

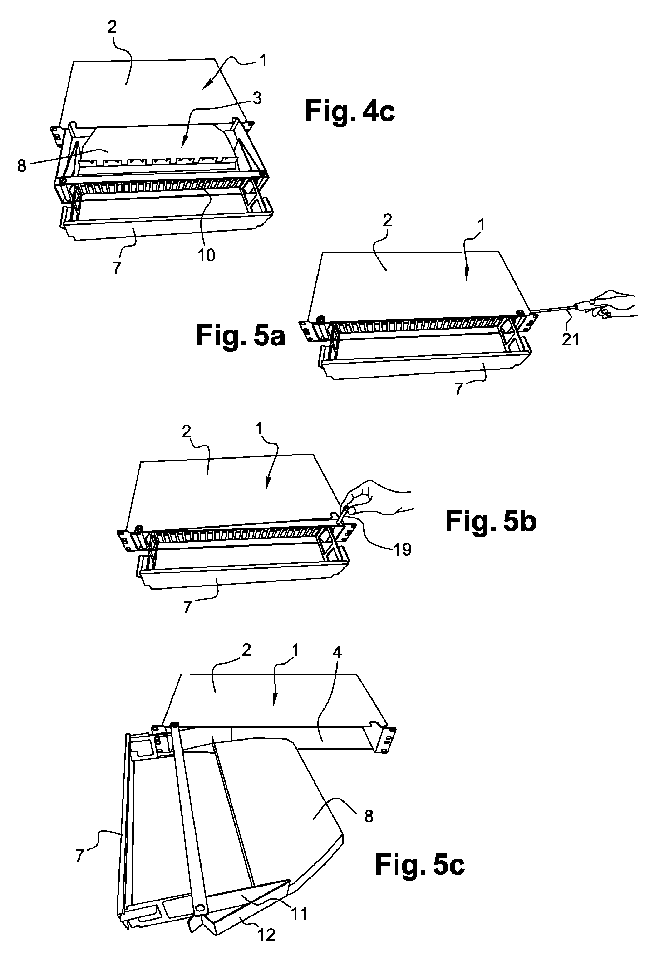

Referring to figure 4c, he maintains his hands against the inner frame 3 and he pulls it towards him and the inner frame 3 slides easily to take out from the outer box 2. The customer has then two choices: either he locks the inner frame 3 in this outside position, or he wants to separate the inner frame 3 from the outer box 2, and in this second case, he bends it up and said inner frame 3 completely takes out. Referring to figure 5a and 5b, if the customer wants now to make turn on the left the inner frame 3, he removes the right shaft 19 with a screwdriver 21 or take away a locking washer.

Referring to figure 5c, once the right shaft 19 has been removed, the inner frame may be turned on the left. The rotation angle may reach approximately 90°. But a mechanical stop placed between the tray 8 and the outer box 2 may limit the opening angle to a value inferior to 90 degrees.

As a conclusion, an optical fibers distribution device 1 according to the invention, involves connecting means between the inner frame 3 and the outer box 2 which makes said device very flexible, because said inner frame 3 may either slide linearly to take out from the box 2, or may turn on the left or right in function of the customer need. The connecting means used in such device 1 may also lock the inner frame 3 within the outer box 2, for the transportation phases.

## Claims

1. Optical fiber distribution device (1), including an outer box (2) and an inner frame (3), said inner frame (3) being movable inside said box (2), said device (1) involving connecting means (12, 19) between said frame (3) and said box (2), so that the inner frame (3) can be rotated in two opposite directions, and can be linearly slid out from the box (2), said connection means (12,19) being conceived to maintain the device (1) in a locking position, for which the inner frame (3) is locked inside the box (2) without moving, said device comprising two shafts (19) placed on its two side ends, one shaft (19) having to be removed to allow the rotation of the inner frame (3) around the other shaft (19), **characterized in that** the inner frame (3) comprises side opening wings (12) placed near by the shafts (19), a pressure exerted with hands (20) simultaneously on each wing (12) releasing the inner frame (3) and allowing said frame (3) to slide linearly to take out from the box (2).

2. Device according to claim 1, **characterized in that** each shaft is composed of a screw (19).

3. Device according to claim 1, **characterized in that** the opening wings (12) are made of a material which is elastically deformable.

4. Device according to any one of claims 1 to 3, **characterized in that** the outer box (2) is a parallelepiped with a rectangular opening (4), the inner frame (3) being able to slide along a direction perpendicular to the opening (4) plane.

5. Device according to any one claims 1 to 4, **characterized in that** the inner frame (3) may be completely separated from the box (2) by bending it up, after it slid.

6. Device according to any one claims 1 to 5, **characterized in that** the outer box (2) comprises two fixing means (5).

## Patentansprüche

1. Glasfaserverteilungsvorrichtung (1), umfassend ein äußeres Gehäuse (2) und einen inneren Rahmen (3), wobei der innere Rahmen (3) in dem Gehäuse (2) beweglich ist, wobei die Vorrichtung (1) Verbindungsmittel (12, 19) zwischen dem Rahmen (3) und dem Gehäuse (2) einschließt, so dass der innere Rahmen (3) in zwei einander gegenüber liegenden Richtungen gedreht werden und linear aus dem Gehäuse (2) geglitten werden kann, wobei die Verbindungsmittel (12, 19) entworfen sind, um die Vorrichtung (1) in einer Verriegelungsposition zu halten, für die der innere Rahmen (3) im Gehäuse (2) verriegelt wird, ohne sich zu bewegen, wobei die Vorrichtung zwei Schäfte (19) aufweist, die auf ihren zwei Enden angeordnet sind, wobei ein Schaft (19) entfernt werden muss, um die Drehung des inneren Rahmen (3) um den äußeren Schaft (19) zu ermöglichen, **dadurch gekennzeichnet, dass** der innere Rahmen (3) seitliche Öffnungsflügel (12) umfasst, die neben den Schäften (19) angeordnet sind, wobei ein Druck, mit Händen (20) gleichzeitig auf jeden Flügel (12) ausgeübt, den inneren Rahmen (3) freigibt und ermöglicht, dass der Rahmen (3) linear gleitet, um aus dem Gehäuse (2) herausgenommen zu werden.

2. Vorrichtung nach Anspruch 1, **dadurch gekennzeichnet, dass** jeder Schaft aus einer Schraube (19) zusammengesetzt ist.

3. Vorrichtung nach Anspruch 1, **dadurch gekennzeichnet, dass** die Öffnungsflügel (12) aus einem Material hergestellt sind, das elastisch verformbar ist.

4. Vorrichtung nach einem der Ansprüche 1 bis 3, **dadurch gekennzeichnet, dass** das äußere Gehäuse (2) ein Parallelepiped mit einer rechtwinkligen Öffnung (4) ist, wobei der innere Rahmen (3) dazu in der Lage ist, gemäß einer Richtung zu gleiten, die senkrecht zur Öffnungsebene (4) ist.

5. Vorrichtung nach einem der Ansprüche 1 bis 4, **dadurch gekennzeichnet, dass** der innere Rahmen (3) vollständig vom Gehäuse (2) getrennt werden kann, in dem er nach dem Geleiten nach oben gebogen wird.

6. Vorrichtung nach einem der Ansprüche 1 bis 5, **dadurch gekennzeichnet, dass** der äußere Rahmen (2) zwei Befestigungsmittel (5) umfasst.

## Revendications

1. Dispositif pour la distribution de fibres optiques (1), incluant un boîtier externe (2) et un châssis interne (3), ledit châssis interne (3) étant mobile à l'intérieur dudit boîtier (2), ledit dispositif (1) présentant des moyens de liaison (12, 19) entre ledit châssis (3) et ledit boîtier (2), de telle sorte que le châssis interne (3) puisse être tourné dans deux directions opposées, et puisse coulisser de manière linéaire hors du boîtier (2), lesdits moyens de liaison (12, 19) étant conçus pour maintenir le dispositif (1) dans une position de blocage, dans laquelle le châssis interne (3) est bloqué à l'intérieur du boîtier (2) sans pouvoir se déplacer, ledit dispositif comprenant deux axes (19) placé sur ses deux extrémités latérales, un axe (19) devant être retiré pour permettre la rotation du châssis interne (3) autour de l'autre axe (19), **caractérisé en ce que** le châssis interne (3) comprend des volets d'ouverture sur le côté (12) placés à proximité des axes (19), une pression exercée avec les mains (20) simultanément sur chaque volet (12) libérant le châssis interne (3) et permettant audit châssis (3) de coulisser de manière linéaire pour être retiré du boîtier (2).

2. Dispositif selon la revendication 1, **caractérisé en ce que** chaque axe est composé d'une vis (19).

3. Dispositif selon la revendication 1, **caractérisé en ce que** les volets d'ouverture (12) sont constitués d'un matériau qui est élastiquement déformable.

4. Dispositif selon l'une quelconque des revendications 1 à 3, **caractérisé en ce que** le boîtier externe (2) est un parallélépipède avec une ouverture rectangulaire (4), le châssis interne (3) pouvant coulisser le long d'une direction perpendiculaire au plan de l'ouverture (4).

5. Dispositif selon l'une quelconque des revendications 1 à 4, **caractérisé en ce que** le châssis interne (3) peut être complètement séparé du boîtier (2) en le tournant vers le haut, une fois qu'il a coulissé.

6. Dispositif selon l'une quelconque des revendications 1 à 5, **caractérisé en ce que** le boîtier externe (2) comprend deux moyens de fixation (5).
